# EUROPEAN PATENT APPLICATION

(11) **EP 4 803 273 A1**
(43) Date of publication of application: **09.09.2026**
(21) Application number: 24885235.2
(22) Date of filing: 31.07.2024
(51) Int. Cl.: B26B 3/00, B23K 26/34, B33Y 10/00, B33Y 40/20, B33Y 50/02

(54) **METHOD FOR PRODUCING KITCHEN KNIFE**

(30) Priority: 31.10.2023 JP 2023187146
(71) Applicant: KAI R&D CENTER CO., LTD., Seki-shi, Gifu 501-3992 (JP)
(72) Inventor: OTSUKA, Jun, Seki-shi, Gifu 501-3992 (JP); NAKAMURA, Toshiya, Seki-shi, Gifu 501-3992 (JP)
(74) Representative: Plasseraud IP
(86) International application number: PCT/JP2024/027423
(87) International publication number: WO 2025/094458

(57) **Abstract**

A 3D print shaping process is performed to shape, by using a 3D printer 100, an entirety of a kitchen knife 1 including a cutting part 11 including a blade edge 13 and a back part 12 located on an opposite side of the blade edge 13 in the cutting part 11, in which the kitchen knife 1 includes a blade part 10 in which a thickness of the cutting part 11 gradually decreases from the back part 12 side toward the blade edge 13, and a handle part 20 connected to the blade part 10.

## Description

### Technical Field

The present disclosure relates to a method of manufacturing a kitchen knife.

### Background Art

A kitchen knife has a structure in which a ferrule and a handle part are attached to a metal blade part including a blade edge (refer to, for example, Patent Literature 1). In the related art, a flat plate-shaped metal plate that has been subjected to laser processing or press processing is cured in a heat treatment process, and then a blade part is formed through various processes such as a grinding-and-polishing process. Further, ferrule welding is performed, and then an assembly process of assembling a handle part is performed to manufacture a kitchen knife.

### Citation List

### Patent Literature

Patent Literature 1: JP 2023-042088 A

### Summary of Invention

### Technical Problem

However, in the method of manufacturing a kitchen knife of the related art, in addition to many processes necessary for shaping a blade part, many manufacturing processes such as a process of connecting a ferrule to the blade part and a process of assembling a handle are required. In addition, since the blade part is formed from a metal plate, a surplus material that has not been used as the blade part is generated, and further, a large amount of dust is generated in a grinding-and-polishing process of forming the shape of a blade edge.

An object of the present disclosure is to provide a method of manufacturing a kitchen knife capable of simplifying a manufacturing process and suppressing generation of a surplus material and generation of dust.

### Solution to Problem

In order to achieve the above object, a method of manufacturing a kitchen knife according to a first invention includes a 3D print shaping process of shaping, by using a 3D printer (100), an entirety of a kitchen knife (1) including a cutting part (11) including a blade edge (13) and a back part (12) located on an opposite side of the blade edge in the cutting part, in which the kitchen knife (1) includes a blade part (10) in which a thickness of the cutting part gradually decreases from the back part side toward the blade edge, and a handle part (20) connected to the blade part.

As described above, by shaping, using the 3D printer, the entirety of the kitchen knife including the blade part in which the blade edge is formed as a tapered shape from the beginning and the handle part, a manufacturing process can be reduced and simplified as compared with a case in which respective parts are assembled with each other after being formed into desired shapes as in the related art. Further, since it is substantially unnecessary to process the blade part and the handle part into the desired shapes, a surplus material generated at the time of performing the process is eliminated, and it is not necessary to use a material more than necessary, so that the material can be reduced. When the blade part is shaped so that the blade edge is formed as a tapered shape from the beginning, generation of dust can be suppressed.

In a second invention, in the 3D print shaping process, as a part of the handle part, in addition to a hilt part (21), a hilt base (22) is shaped together with the blade part, in which the hilt base is formed to connect the blade part to the hilt part and has a dimension gradually increasing from a thickness of the blade part toward a thickness of the hilt part from the blade part to the hilt part.

By shaping the kitchen knife using the 3D printer, the kitchen knife can be shaped with an unconventional structure, and thus, when the blade part and the handle part are formed, it is possible to simultaneously shape a structure in which the hilt part and the blade part are connected to each other with the hilt base interposed therebetween. Then, a structure formed to be continuously connected from the blade part to the hilt part can be shaped by forming the hilt base in such a way that, from the blade part to the hilt part, the dimension of the hilt base gradually increases from the thickness of the thin plate-shaped blade part toward the thickness of the hilt part.

In a third invention, in the 3D print shaping process, the kitchen knife is shaped by laminating a plurality of layers in a shape of the kitchen knife using the 3D printer, and the kitchen knife is shaped by laminating the layers from the back part toward the blade edge such that the back part of the kitchen knife is oriented downwards and the blade edge is oriented upwards.

The thickness of the blade part gradually decreases from the back part side toward the blade edge side. When the kitchen knife having such a shape is shaped, if the back part having a large thickness is formed first and the blade edge having a small thickness is formed later, shaping can be easily performed as compared with a case in which the blade edge having a small thickness is formed first and the back part having a large thickness is formed later.

In an fourth invention, in the 3D print shaping process, the kitchen knife is shaped by laminating a plurality of layers in a shape of the kitchen knife using the 3D printer, and the kitchen knife is shaped such that one of both surfaces of the blade part in the kitchen knife is oriented upwards and the other is oriented downwards.

As described above, the kitchen knife is shaped by determining the vertical orientation of the blade part. Thus, when the kitchen knife is formed with a laminated structure of a plurality of layers by using the 3D printer, the blade part can be made along the plane direction of the layers, that is, the cutting direction by the kitchen knife can be made along the plane direction of each layer. Therefore, the blade part can be further strengthened.

A fifth invention includes, after the 3D print shaping process, a blade sharpening process of sharpening the cutting part including the blade edge. Since all of the blade part formed as a tapered shape and the handle part have been shaped by the 3D printer, it is possible to complete, after the 3D print shaping process, the kitchen knife having a sharp blade edge by proceeding to at least the blade sharpening process, and the manufacturing process can be further simplified.

A sixth invention includes, after the 3D print shaping process, a heat treatment process of curing the kitchen knife, a distortion removing process of removing distortion of the kitchen knife that has been subjected to the heat treatment process, and a blade sharpening process of sharpening the cutting part including the blade edge of the kitchen knife that has been subjected to the distortion removing process. As described above, even if the heat treatment process and the distortion removing process are performed in addition to the blade sharpening process, it is possible to omit the processes that are necessary in the related art, and the manufacturing process can be simplified. In addition, as in a seventh invention, even if a shot blasting process of roughening a surface of a portion in the blade part, the portion being different from the blade edge of the cutting part in the blade part, is performed on the kitchen knife that has been subjected to the distortion removing process, a process required in the related art can be omitted and as such, the manufacturing process can be simplified.

In an eighth invention, in the 3D print shaping process, a protruding rib (16) is formed on one surface side of the blade part, and shaping of the kitchen knife is performed in such a way that a position on the other surface (10b) located on an opposite side of one surface (10a) in the blade part, corresponding to a formation position of the rib on the one surface, and a position on the other surface (10b), corresponding to a periphery of the formation position of the rib, are flush with each other.

As described above, if the 3D printer is used, even if the rib is formed on one surface side of the blade part, the position on the other surface side, corresponding to the formation position of the rib, and the position on the other surface side, corresponding to the periphery of the formation position of the rib, can be formed to be flush with each other. Since shaping without a recess caused by the formation of the rib can be performed, it is not necessary to perform a grinding process to flatten the other surface side and as such, the manufacturing process can be further simplified.

In a ninth invention, in the 3D print shaping process, at least one of a portion different from the blade edge of the cutting part in the blade part and the handle part has a three-dimensional structure having a cavity (30) caused by a structure recessed from a surface of the kitchen knife or a structure formed by penetrating the surface of the kitchen knife.

As described above, a kitchen knife having a complicated structure such as a three-dimensional structure having a cavity can be shaped using the 3D printer. In this case, by providing the cavity in the kitchen knife, it is also possible to reduce a material of the kitchen knife. In addition, if the cavity is provided at a portion different from the blade edge of the cutting part in the blade part or at the handle part, a material can be reduced at a portion not used as a blade, a material does not need to be used more than necessary, and the weight of the kitchen knife can be appropriately designed.

Note that parenthesized reference numerals attached to the respective constituent elements and the like indicate an example of a correspondence relationship between the constituent elements and the like and specific constituent elements and the like described in embodiments to be described later.

### Brief Description of Drawings

[Figure 1A]Fig. 1A is a front view showing a kitchen knife according to a first embodiment of the present disclosure.
[Figure 1B]Fig. 1B is a view of Fig. 1A when viewed from above.
[Figure 1C]Fig. 1C is a view of Fig. 1A when viewed from the left.
[Figure 2]Fig. 2 is a flowchart showing a manufacturing process of the kitchen knife.
[Figure 3]Fig. 3 is a view showing a state of manufacturing the kitchen knife by a 3D printer.
[Figure 4A]Fig. 4A is an enlarged cross-sectional view of the vicinity of a blade edge of a cutting part after a 3D print shaping process.
[Figure 4B]Fig. 4B is an enlarged cross-sectional view of a blade edge portion of the cutting part after a blade sharpening process.
[Figure 5]Fig. 5 is a cross-sectional view of a portion of a cutting part of a kitchen knife according to a second embodiment of the present disclosure.

### Description of Embodiments

Hereinafter, embodiments of the present disclosure will be described with reference to the drawings. Note that, in the respective embodiments including other embodiments described below, the same or equivalent portions will be denoted by the same reference numerals for description thereof.

### (First Embodiment)

In the present embodiment, a method of manufacturing a kitchen knife using a 3D printer will be described. Note that an X axis, a Y axis, and a Z axis are shown in the drawings attached to the present specification. A length direction of the kitchen knife is referred to as an X axis, a blade width direction orthogonal to the X axis is referred to as a Y axis, and a thickness direction of the kitchen knife orthogonal to the X axis and the Y axis is referred to as a Z axis.

### [Structure of Kitchen Knife]

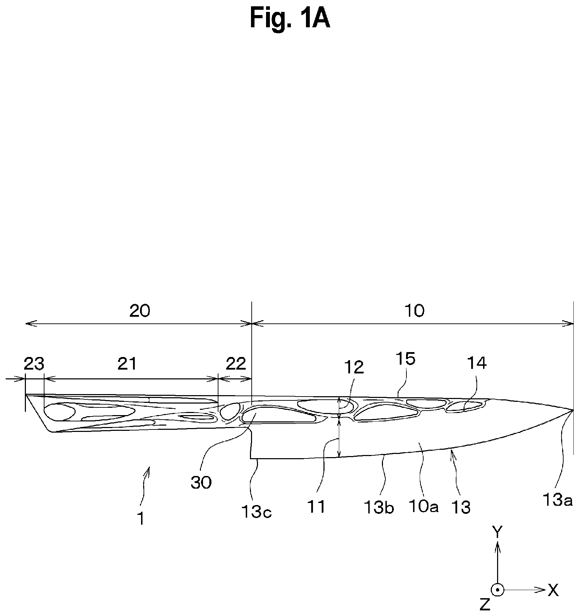

First, a kitchen knife 1 manufactured using a 3D printer will be described with reference to Figs. 1A to 1C. The kitchen knife 1 shown in Figs. 1A to 1C includes a blade part 10 and a handle part 20, and has a structure in which the handle part 20 is connected to the blade part 10 in the X-axis direction. The blade part 10 and the handle part 20 are each formed of, for example, maraging steel, and are all simultaneously formed as one part using the 3D printer. The constituent materials of the blade part 10 and the handle part 20 may be other metals such as stainless steel and titanium, or other materials such as ceramics, and resin.

The blade part 10 includes a cutting part 11 and a back part 12 and is connected to the handle part 20 at the back part 12.

The cutting part 11 is a portion extending from a blade edge 13 to a ridge line 14. The cutting part 11 has a thin plate shape, and a cross section along the YZ plane gradually tapers from the ridge line 14 toward the blade edge 13. One surface 10a and the other surface 10b on the opposite side thereof are each a flat surface inclined in the Y-axis direction or a curved surface in which a cross-sectional shape on a plane parallel to the YZ plane is a middle bulging clamshell shape. In the cutting part 11, the blade edge 13 is sharpened over the entire region from a tip 13a to a blade 13b and a jaw 13c.

In addition, the back part 12 has a three-dimensional shape from the ridge line 14 to a peak 15, and has a three-dimensional structure continuously connected to the handle part 20. The dimension of the back part 12 gradually increases in the Y-axis direction from the tip side to the rear end side of the blade part 10 in the X-axis direction, specifically, from a position between the tip 13a and the blade 13b in the cutting part 11 toward the jaw 13c, and is made to coincide with the dimension in the Y-axis direction in the handle part 20 at a position where the back part 12 is connected to the handle part 20.

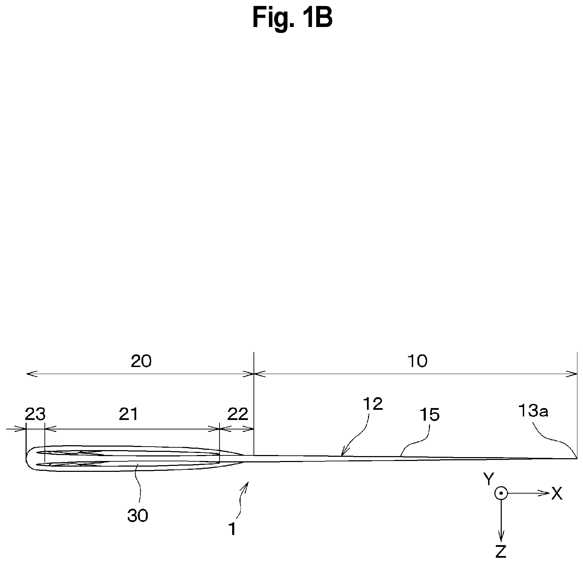

The handle part 20 includes a hilt part 21, a hilt base 22, and a hilt end 23, is disposed on the opposite side of the blade part 10 in the kitchen knife 1, and has a rod shape. The hilt part 21 is a portion to be gripped by a user, and for example, a schematic outer shape of a cross section thereof is formed in a shape that is easy to grip, such as a polygonal shape with rounded corners or an elliptical shape. The hilt base 22 is a portion connecting the hilt part 21 to the blade part 10 and is formed to have a shape in which, from the blade part 10 to the hilt part 21, a thickness of the hilt base 22 gradually increases from a thickness of the back part 12 in the thin plate-shaped blade part 10 toward a thickness of the hilt part 21. Specifically, as shown in Fig. 1B, when the kitchen knife 1 is viewed from the peak 15 side, the hilt base 22 is formed to have a substantially isosceles trapezoidal shape in which, for example, the tip side of the kitchen knife 1 is an upper base and the rear end side is a lower base. The hilt base 22 may have either a structure in which the thickness increases linearly from the thickness of the back part 12 toward the thickness of the hilt part 21 or a structure in which the amount of increase in the thickness increases from the back part 12 toward the hilt part 21, or may have a structure in which the thickness increases from a position in the middle from the back part 12 toward the hilt part 21. The hilt end 23 is a rear end portion of the handle part 20.

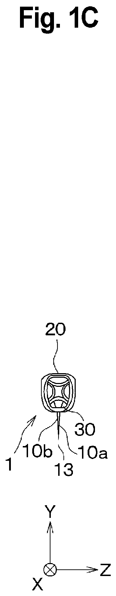

In addition, a plurality of cavities 30 having a structure recessed from the surface or a structure obtained by penetrating the surface are formed in a portion of the kitchen knife 1, which is different from the blade edge 13, preferably in a portion different from the cutting part 11 to form a three-dimensional structure. Specifically, the entirety of the back part 12 and the handle part 20 including the hilt part 21 and the hilt base 22 has a three-dimensional structure having the cavity 30, and as shown in Fig. 1C, the cavity 30 is also formed in the hilt end 23. For example, as shown in Figs. 1A and 1B, this three-dimensional structure is a structure in which the back part 12, the hilt base 22, and the hilt part 21 are continuously connected. That is, the blade part 10 and the handle part 20 are formed as an integrated part and are formed as a continuous three-dimensional structure in which the back part 12 and the handle part 20 are continuously formed without a joint up to a boundary position between the blade part 10 and the handle part 20. The kitchen knife 1 is formed by such a structure.

### [Method of Manufacturing Kitchen Knife]

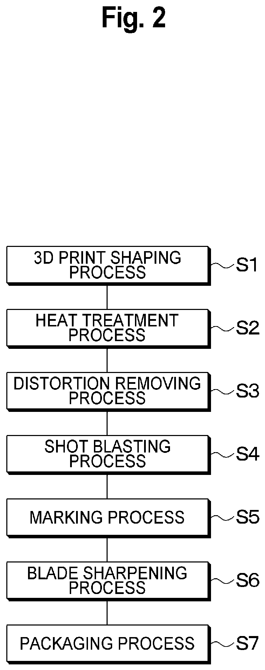

Next, a method of manufacturing the kitchen knife 1 configured as described above will be described with reference to a flowchart shown in Fig. 2. The kitchen knife 1 is manufactured by performing each manufacturing process in steps S1 to S7 shown in Fig. 2.

### (a) 3D print shaping process

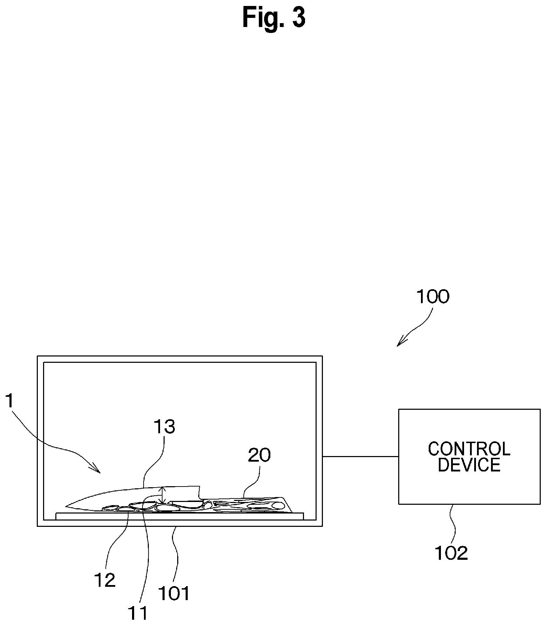

First, in step S1, a 3D print shaping process of shaping the kitchen knife 1 shown in Figs. 1A to 1C using the 3D printer is performed. Any type of 3D printer may be used, but here, a case of shaping the kitchen knife 1 by an additive manufacturing method will be described as an example. Fig. 3 shows a 3D printer 100 used for shaping the kitchen knife 1. The 3D printer 100 includes a printing machine 101, a control device 102, and the like. The printing machine 101 is a device that shapes the kitchen knife 1 by an additive manufacturing method. The control device 102 outputs data used for manufacturing the kitchen knife 1 to the printing machine 101 and controls the printing machine 101 to shape the kitchen knife 1. The control device 102 includes a microcomputer including a CPU, a ROM, a RAM, an I/O, and the like, and stores therein various programs such as slice software.

For example, the kitchen knife 1 is designed in advance using 3D CAD or the like, and 3D data of the kitchen knife 1 is input into the control device 102. At this time, if the 3D data is not polygon data but 3D CAD data, the control device 102 converts the 3D data into polygon data. Subsequently, the control device 102 creates slice data indicating a shaping pattern in a case in which the kitchen knife 1 is sliced into each layer from the polygon data using the slice software.

Then, the slice data is output from the control device 102 to the printing machine 101, and the shaping patterns of the respective layers are sequentially laminated based on the slice data to shape the kitchen knife 1. As a material used for shaping, for example, maraging steel is used, but other metals such as stainless steel and titanium, or other materials such as ceramics and resin may be used. As a result, the blade part 10 and the handle part 20 are simultaneously formed, the back part 12 is connected to the hilt part 21 with the hilt base 22 interposed therebetween, and the kitchen knife 1 in which the blade part 10 and the handle part 20 are integrated as one part can be shaped.

At this time, although the order of shaping the kitchen knife 1, including from which location to start, is arbitrary, as shown in Fig. 3, it is preferable to shape the kitchen knife 1 by laminating each layer from the back part 12 toward the blade edge 13 so that the back part 12 is oriented downwards and the blade edge 13 is oriented upwards.

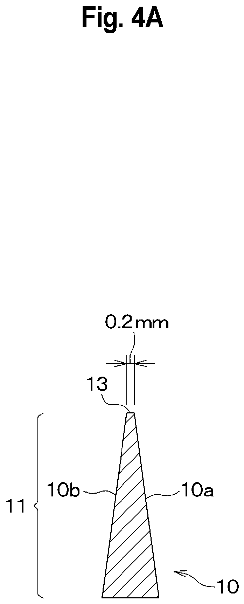

The thickness of the blade part 10 gradually decreases from the back part 12 side toward the blade edge 13 side. When the blade part 10 and the handle part 20 are formed by the 3D printer 100, shaping can be easily performed in such a way that the back part 12 having a large thickness is formed first and the blade edge 13 having a small thickness is formed later, as compared with a case in which the blade edge 13 having a small thickness is formed first and the back part 12 having a large thickness is formed later. In addition, it is desirable to reduce the thickness of the blade edge 13 as much as possible to about 0.2 mm as shown in Fig. 4A, for example, in order to reduce processing at the time of a blade sharpening process performed in the subsequent process. However, if the blade edge 13 is formed last, it is not necessary to consider what is to be laminated on the blade edge 13, so that the thickness of the blade edge 13 can be further reduced.

### (b) Heat treatment process

Regarding the kitchen knife 1 shaped by the 3D print shaping process, an aging curing heat treatment process is performed in step S2. In the heat treatment process, by performing a high temperature heat treatment and then cooling to normal temperature, the temporal transformation of the structure of a constituent material of the kitchen knife 1 is accelerated, and the kitchen knife 1 is cured. In addition, if cooling and reheating are performed as necessary, it is possible to further impart, to the kitchen knife 1, ductility capable of uniformizing hardness of the kitchen knife 1 and suppressing bending and cracking of the kitchen knife 1.

### (c) Distortion removing process

After the heat treatment process, a distortion removing process is performed in step S3. Since distortion occurs in the kitchen knife 1 due to expansion and contraction of the volume or the like, distortion is removed by straightening the distorted portion in the distortion removing process.

### (d) Shot blasting process

After the distortion removing process, a shot blasting process is performed in step S4. In the shot blasting process, a surface of a portion of the kitchen knife 1, which is different from the blade edge 13, is subjected to shot blasting processing in which glass beads composed of fine glass particles are blown. As a result, the surfaces of the blade part 10 and the handle part 20 become clean and fine roughened surfaces.

### (e) Marking process

After the shot blasting process, a marking process is performed in step S5. In the marking process, various markings such as a brand name, a history of used materials, and an execution date and time of each process are performed on any portion of the kitchen knife 1, for example, on the back part 12. As a result, traceability can be obtained.

### (f) Blade sharpening process

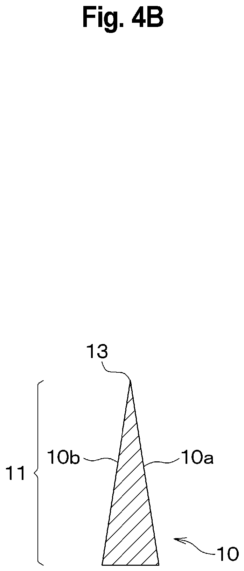

After the marking process, a blade sharpening process is performed in step S6. In the blade sharpening process, blade sharpening is performed on the cutting part 11 of the blade part 10. For example, in the case of performing blade sharpening by wet blade sharpening, blade sharpening is performed so as not to generate heat due to friction while water is applied to a grindstone (not shown) or the blade part 10. As a result, the blade edge 13 becomes smoother, and the sharpness can be improved. The blade part 10 shaped in the 3D print shaping process is in a state in which the blade edge 13 is already formed as a tapered shape, as shown in Fig. 4A. For this reason, unlike grinding and polishing a flat plate having a rectangular cross section until the tip of the flat plate has a sharp blade edge shape, the blade sharpening process here requires only finishing blade sharpening that performs slight polishing until the blade edge 13 becomes sharp, as shown in Fig. 4B. Therefore, generation of dust is also reduced.

### (g) Packaging process

Finally, in step S7, a packaging process of boxing the kitchen knife 1 that has undergone a predetermined inspection is performed. As a result, the kitchen knife 1 is packaged and is completed in a state in which the kitchen knife 1 can be shipped.

As described above, the kitchen knife 1 is shaped by performing the 3D print shaping process using the 3D printer. Therefore, the following effects can be obtained.
(1) In the method of manufacturing the kitchen knife 1 described in the present embodiment, the entirety of the kitchen knife 1 is shaped using the 3D printer 100. As in the related art, in a case in which a blade part, a handle part, and a ferrule are separately manufactured into desired shapes and then are assembled with each other, each process is required, and the number of manufacturing processes increases. However, if the 3D printer 100 is used as in the present embodiment, since the entirety of the kitchen knife 1 including the blade part 10 in which the blade edge 13 is formed as a tapered shape from the beginning and the handle part 20 can be shaped, the manufacturing processes can be reduced. In addition, by reducing the number of manufacturing processes, environmental load reduction and energy reduction can also be achieved.

Specifically, in the present embodiment, the kitchen knife 1 is manufactured by performing respective processes shown in the steps S1 to S7 described above. Since the kitchen knife 1 can be manufactured only by performing the respective steps S1 to S7, the manufacturing process of the kitchen knife 1 can be simplified as compared with the related art. Among the processes shown in steps S1 to S7, there is a process that can be omitted only from the viewpoint of completing the manufacturing itself of the kitchen knife 1, and the process can be further simplified. For example, the manufacturing itself of the kitchen knife 1 is completed without performing the marking process in step S5 and the packaging process in step S7. Furthermore, if the shape of the kitchen knife 1 is brought close to the shape of the final product at the time of shaping the kitchen knife 1 using the 3D printer 100, the heat treatment process, the distortion removing process, and the shot blasting process in steps S2 to S4 can be further omitted. That is, since all of the blade part 10 in which the blade edge 13 is formed as a tapered shape and the handle part 20 have been shaped by the 3D printer 100, thereafter, it is possible to complete the kitchen knife 1 by proceeding to at least the blade sharpening process and processing the blade edge 13 to be sharp, and the manufacturing process can be further simplified. In addition, even if the heat treatment process, the distortion removing process, and the shot blasting process are performed in addition to the blade sharpening process, it is possible to omit the processes that are necessary in the related art and as such, the manufacturing process can be simplified.

For example, in the manufacturing method of the related art, after a flat plate-shaped metal plate is subjected to laser processing or press processing to form an outer shape of a blade part, a heat treatment process and a distortion removing process are performed, and then an outer circumference polishing process and a blade thinning grinding process are performed in order to sharpen a tip of the flat plate-shaped blade part. In addition, after a blade leveling process of forming a cutting part into a curved surface having a smooth middle bulging clamshell shape and a glazing process of finely polishing the entirety of the blade part are performed, a ferrule welding process of welding a ferrule and polishing a welded portion is performed, and an assembly process of attaching a handle part to the blade part to which the ferrule has been welded is further performed.

On the other hand, according to the manufacturing method of the present embodiment, it is possible to shape, by the 3D printer 100, the kitchen knife 1 in a state in which the blade part 10 in which the blade edge 13 is formed as a tapered shape from the beginning and the handle part 20 are connected to each other. Therefore, it is possible to omit the laser processing or the press processing, the outer circumference polishing process, the blade thinning grinding process, the blade leveling process, the glazing process, the ferrule welding process, and the assembly process.

(2) By using the 3D printer 100, the kitchen knife 1 can be shaped in various shapes, and the blade part 10 in which the blade edge 13 is formed as a tapered shape from the beginning and the handle part 20 can be shaped. Therefore, since it is substantially unnecessary to process the blade part 10 and the handle part 20 into desired shapes, a surplus material generated at the time of performing various processes is eliminated, and it is not necessary to use a material more than necessary, so that the material can be reduced. In addition, as in the manufacturing method of the related art, in a case in which a flat plate material is subjected to press processing or laser processing to form an outer shape of a blade part, and then the plate material is ground to form a blade edge shape, it is necessary to perform a grinding process, a polishing process, and the like to form the blade edge into a sharp shape, and thus a larger amount of dust is generated. On the other hand, if the blade part 10 is shaped by the 3D printer 100 so that the blade edge 13 is formed as a tapered shape from the beginning, generation of dust can be significantly reduced.

(3) By shaping the kitchen knife 1 using the 3D printer 100, the kitchen knife 1 can be shaped with an unconventional structure, and the kitchen knife 1 can be shaped with various materials such as ceramics and resin as well as metal, so that a degree of freedom in designing the kitchen knife can be improved.

For example, in the case of shaping the kitchen knife 1 using the 3D printer 100, when the blade part 10 and the handle part 20 are formed, it is possible to simultaneously shape a structure in which the hilt part 21 and the blade part 10 are connected to each other with the hilt base 22 interposed therebetween. Then, a structure formed to be continuously connected from the blade part 10 to the hilt part 21 can be shaped by forming the hilt base 22 in such a way that, from the blade part 10 to the hilt part 21, the dimension of the hilt base 22 gradually increases from the thickness of the thin plate-shaped blade part 10 toward the thickness of the hilt part 21.

In addition, the kitchen knife 1 having a complicated structure such as a three-dimensional structure having the cavity 30 can be shaped. In this case, by providing the cavity 30 in the kitchen knife 1, it is also possible to reduce the material of the kitchen knife 1. With respect to a portion in which the cavity 30 is formed, if a portion different from the blade edge 13 in the kitchen knife 1, preferably a portion different from the cutting part 11, such as the back part 12 or the handle part 20, is used as the portion, a material can be reduced at the portion not used as a blade, a material does not need to be used more than necessary, and the weight of the kitchen knife 1 can be appropriately designed.

(4) The thickness of the blade part 10 gradually decreases from the back part 12 side toward the blade edge 13 side. When the kitchen knife 1 having such a shape is shaped, if the back part 12 having a large thickness is formed first and the blade edge 13 having a small thickness is formed later, shaping can be easily performed as compared with a case in which the blade edge 13 having a small thickness is formed first and the back part 12 having a large thickness is formed later. In addition, if the blade edge 13 is formed last, it is not necessary to consider what is to be laminated on the blade edge 13, so that the thickness of the blade edge 13 can be further reduced.

### (Second Embodiment)

A second embodiment will be described. In the present embodiment, the shape of the blade part 10 is changed from that of the first embodiment, and the others are the same as those of the first embodiment, and thus only the differences from the first embodiment will be described.

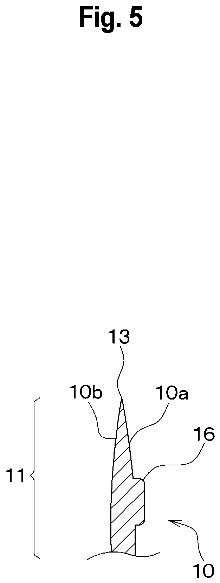

Fig. 5 shows a state in which the kitchen knife 1 after the 3D print shaping process in step S1 described in the first embodiment is cut along a cross section parallel to the YZ plane. As shown in this drawing, a protruding rib 16 is formed on one surface 10a side of the cutting part 11 in the blade part 10. On the other surface 10b on the opposite side of the one surface 10a on which the rib 16 is formed, a position corresponding to the formation position of the rib 16 and a position corresponding to the periphery of the formation position of the rib 16 on the one surface 10a are flush with each other.

When the rib 16 is provided on the one surface 10a side of the kitchen knife 1, a cut piece of an ingredient cut by the kitchen knife 1 is easily separated from the kitchen knife 1, and it is possible to improve the blade separation of the kitchen knife 1. In a case in which the kitchen knife 1 including the rib 16 is manufactured, if the 3D printer 100 is used, even if the rib 16 is formed on the one surface 10a side of the blade part 10, shaping can be performed in such a way that a position on the other surface 10b side, which corresponds to the formation position of the rib 16, and a position on the other surface 10b side, which corresponds to the periphery of the formation position of the rib 16, can be flush with each other. In a case in which the rib 16 is formed by press processing or the like, since a recess is formed in the other surface 10b side by forming the rib 16, a process of grinding a thickness equal to or larger than the recess caused by the rib formation is required in order to flatten the other surface 10b side. However, if the rib 16 is formed from the beginning by the 3D printer 100, since the shaping without the recess caused by formation of the rib 16 can be performed, the manufacturing process can be further simplified.

### (Other Embodiments)

The present disclosure is not limited to the above embodiments, and can be appropriately changed within the scope described in the claims. In addition, in each of the above embodiments, it goes without saying that the elements constituting the embodiments are not necessarily essential except for a case in which it is explicitly stated that the elements are particularly essential and a case in which the elements are considered to be obviously essential in principle. In each of the above embodiments, in a case in which a numerical value such as the number, numerical value, amount, or range of the constituent elements of the embodiments is mentioned, the numerical value is not limited to a specific number except for a case in which it is explicitly stated that the numerical value is particularly essential and a case in which the numerical value is obviously limited to the specific number in principle. In each of the above embodiments, when a shape, a positional relationship, and the like of the constituent elements and the like are mentioned, the shape, the positional relationship, and the like are not limited except for a case in which the shape, the positional relationship, and the like are particularly specified and a case in which the shape, the positional relationship, and the like are limited to a specific shape, a specific positional relationship, and the like in principle.

For example, in the first embodiment, the kitchen knife 1 is shaped in such a way that the back part 12 side is oriented downwards and the blade edge 13 side is oriented upwards during the 3D print shaping process. However, this is merely an example, and the kitchen knife 1 may be shaped with other orientations. As an example, the kitchen knife 1 can be shaped in such a way that one of both surfaces of the blade part 10 in the kitchen knife 1 is oriented upwards and the other is oriented downwards.

As described above, since the kitchen knife 1 is shaped by determining the vertical orientation of the blade part 10, when the kitchen knife 1 is formed with a laminated structure of a plurality of layers by using the 3D printer 100, the blade part 10 can be made along the plane direction of the layers, that is, the cutting direction by the kitchen knife 1 can be made along the plane direction of each layer. In the case of forming a laminated structure of a plurality of layers using the 3D printer 100, joining between the respective layers is strong, but the blade part 10 can be made stronger when the same layer has a wide area. Therefore, the kitchen knife 1 is shaped by the 3D printer 100 in such a way that one of both surfaces of the blade part 10 is oriented upwards and the other is oriented downwards, so that the blade part 10 can be further strengthened.

In each of the above embodiments, the back part 12 and the handle part 20 have a three-dimensional structure by providing the plurality of cavities 30, but may be formed at a portion of one connected kitchen knife 1, which is different from the blade edge 13 instead of providing the plurality of cavities 30.

Furthermore, in the second embodiment, a case in which the rib 16 is formed as a structure for improving blade separation has been described as an example, but it is also possible to improve blade separation by forming a recess or a through hole in a portion of the cutting part 11, which is different from the blade edge 13. The recess or the through hole can also be formed from the beginning by shaping the kitchen knife 1 using the 3D printer 100, and thus the manufacturing process of the kitchen knife 1 can be further simplified.

### Reference Signs List

- 1: KITCHEN KNIFE
- 10: BLADE PART
- 10a: ONE SURFACE
- 10b: OTHER SURFACE
- 11: CUTTING PART
- 12: BACK PART
- 13: BLADE EDGE
- 13a: TIP
- 13b: BLADE
- 13c: JAW
- 14: RIDGE LINE
- 15: PEAK
- 16: RIB
- 20: HANDLE PART
- 21: HILT PART
- 22: HILT BASE
- 23: HILT END
- 30: CAVITY
- 100: 3D PRINTER
- 101: PRINTING MACHINE
- 102: CONTROL DEVICE

FIG. 2
   - S1: 3D PRINT SHAPING PROCESS
   - S2: HEAT TREATMENT PROCESS
   - S3: DISTORTION REMOVING PROCESS
   - S4: SHOT BLASTING PROCESS
   - S5: MARKING PROCESS
   - S6: BLADE SHARPENING PROCESS
   - S7: PACKAGING PROCESS
FIG. 3
   - 102: CONTROL DEVICE

## Claims

1. A method of manufacturing a kitchen knife, the method comprising a 3D print shaping process of shaping, by using a 3D printer (100), an entirety of a kitchen knife (1) including a cutting part (11) including a blade edge (13) and a back part (12) located on an opposite side of the blade edge in the cutting part, the kitchen knife (1) including a blade part (10) in which a thickness of the cutting part gradually decreases from the back part side toward the blade edge, and a handle part (20) connected to the blade part.

2. The method of manufacturing a kitchen knife according to claim 1, wherein, in the 3D print shaping process, as a part of the handle part, in addition to a hilt part (21), a hilt base (22) is shaped together with the blade part, the hilt base connecting the blade part to the hilt part and having a dimension gradually increasing from a thickness of the blade part toward a thickness of the hilt part from the blade part to the hilt part.

3. The method of manufacturing a kitchen knife according to claim 1, wherein, in the 3D print shaping process, the kitchen knife is shaped by laminating a plurality of layers in a shape of the kitchen knife using the 3D printer, and the kitchen knife is shaped by laminating the layers from the back part toward the blade edge such that the back part of the kitchen knife is oriented downwards and the blade edge is oriented upwards.

4. The method of manufacturing a kitchen knife according to claim 1, wherein in the 3D print shaping process, the kitchen knife is shaped by laminating a plurality of layers in a shape of the kitchen knife using the 3D printer, and the kitchen knife is shaped such that one of both surfaces of the blade part in the kitchen knife is oriented upwards and the other is oriented downwards.

5. The method of manufacturing a kitchen knife according to claim 1, comprising, after the 3D print shaping process, a blade sharpening process of sharpening the cutting part including the blade edge.

6. The method of manufacturing a kitchen knife according to claim 1, comprising, after the 3D print shaping process,
a heat treatment process of curing the kitchen knife;
a distortion removing process of removing distortion of the kitchen knife that has been subjected to the heat treatment process; and
a blade sharpening process of sharpening, with respect to the kitchen knife that has been subjected to the distortion removing process, the cutting part including the blade edge.

7. The method of manufacturing a kitchen knife according to claim 1, comprising, after the 3D print shaping process,
a heat treatment process of curing the kitchen knife;
a distortion removing process of removing distortion of the kitchen knife that has been subjected to the heat treatment process;
a shot blasting process of roughening, with respect to the kitchen knife that has been subjected to the distortion removing process, a surface of a portion in the blade part, the portion being different from the blade edge of the cutting part in the blade part; and
a blade sharpening process of sharpening, with respect to the kitchen knife that has been subjected to the shot blasting process, the cutting part including the blade edge.

8. The method of manufacturing a kitchen knife according to any one of claims 1 to 7, wherein, in the 3D print shaping process, a protruding rib (16) is formed on one surface side of the blade part, and shaping of the kitchen knife is performed such that a position on the other surface (10b) located on an opposite side of one surface (10a) in the blade part, corresponding to a formation position of the rib on the one surface, and a position on the other surface (10b), corresponding to a periphery of the formation position of the rib, are flush with each other.

9. The method of manufacturing a kitchen knife according to any one of claims 1 to 7, wherein, in the 3D print shaping process, at least one of a portion different from the blade edge of the cutting part in the blade part and the handle part has a three-dimensional structure having a cavity (30) caused by a structure recessed from a surface of the kitchen knife or a structure formed by penetrating the surface of the kitchen knife.
